# EUROPÄISCHE PATENTSCHRIFT

(11) **EP 3 658 349 B1**
(45) Veröffentlichungstag und Bekanntmachung des Hinweises auf die Patenterteilung: **07.06.2023**
(21) Anmeldenummer: 18743005.3
(22) Anmeldetag: 17.07.2018
(51) Int. Cl.: B29C 48/92, B29C 48/88, B29C 48/13, B29C 48/30, B29C 48/09

(54) **VERFAHREN UND VORRICHTUNG ZUR FERTIGUNGSKONTROLLE EINES EXTRUDIERTEN KUNSTSTOFFPRODUKTS SOWIE EXTRUSIONSANLAGE ZUM EXTRUDIEREN EINES DERARTIGEN KUNSTSTOFFPRODUKTS**
METHOD AND DEVICE FOR THE PRODUCTION CONTROL OF AN EXTRUDED PLASTICS PRODUCT AND EXTRUSION INSTALLATION FOR EXTRUDING SUCH A PLASTICS PRODUCT
PROCÉDÉ ET DISPOSITIF POUR LE CONTRÔLE DE LA FABRICATION D'UN PRODUIT EXTRUDÉ EN MATIÈRE PLASTIQUE AINSI QU'INSTALLATION D'EXTRUSION POUR L'EXTRUSION D'UN PRODUIT EN MATIÈRE PLASTIQUE DE CE TYPE

(30) Priorität: 26.07.2017 DE 102017116955
(43) Veröffentlichungstag der Anmeldung: 03.06.2020
(73) Patentinhaber: Delfingen FR-Anteuil S.A., 25340 Anteuil (FR)
(72) Erfinder: RAUSCH, Hubert, 97486 Königsberg (DE); THOMAMÜLLER, Tobias, 83052 Bruckmühl (DE)
(74) Vertreter: Horn Kleimann Waitzhofer Patentanwälte PartG mbB
(86) Internationale Anmeldenummer: PCT/EP2018/069398
(87) Internationale Veröffentlichungsnummer: WO 2019/020436

(56) Entgegenhaltungen:
- EP-A1- 0 287 551
- EP-A1- 1 616 687
- WO-A1-00/10794
- DE-A1-102006 012 417
- DE-A1-102010 027 818
- DE-A1-102016 119 872
- JP-A- 2006 056 215
- JP-A- 2006 056 216
- JP-A- 2007 216 481
- JP-A- 2008 246 866

## Beschreibung

Die vorliegende Erfindung betrifft ein Verfahren zur Fertigungskontrolle eines extrudierten Kunststoffprodukts, eine Vorrichtung zur Fertigungskontrolle eines derartigen extrudierten Kunststoffprodukts sowie eine Extrusionsanlage mit einer derartigen Vorrichtung zum Extrudieren eines derartigen Kunststoffprodukts.

Wellschläuche oder Wellrohre können insbesondere im Automobilbau als Schutzrohre für Kabel, wie beispielsweise elektrische Leitungen, eingesetzt werden. Derartige Wellschläuche weisen abwechselnd angeordnete Wellenberge und Wellentäler auf. Diese Wellenberge und Wellentäler werden nach einem Extrudieren eines Kunststoffmaterials mit Hilfe eines sogenannten Corrugators an den Wellschlauch angeformt. Hierzu weist der Corrugator paarweise angeordnete Formbacken auf, die auf Führungsbahnen kontinuierlich umlaufen. Zur Qualitätskontrolle oder Fertigungskontrolle, insbesondere zur Wandstärkenkontrolle, des Wellschlauchs können nach dem Corrugator stichweise Proben des Wellschlauchs entnommen und analysiert werden.

Die DE 10 2016 119 872 A1 zeigt ein Verfahren zur Regelung der Formstabilität eines Folienschlauchs in der Schlauchbildungszone bei dessen Herstellung mittels einer Blasfolienextrusionsanlage.

Die WO 00/10794 A1 beschreibt ein Verfahren zur Herstellung von aus einem Kunststoff gebildeten länglichen Gegenständen, Vollprofilen, Hohlprofilen insbesondere für den Fensterbau, bei dem das Rohmaterial oder die Rohmaterialien zur Bildung einer Schmelze aufbereitet beziehungsweise plastifiziert werden und die Schmelze daran anschließend auf die gewünschte Form zu einem den Gegenstand ausbildenden Schmelzestrang räumlich sowie querschnittsmässig umgeformt wird.

Die DE 10 2010 027 818 A1 zeigt eine Messanlage zur Ermittlung eines die Druckeigenschaften von Kunststoffen charakterisierenden Materialkennwertes. Die EP 1 616 687 A1 beschreibt ein Verfahren zur Überwachung und Konstanthaltung der Produktionsbedingungen bei der Herstellung von Schlauchfolien. Die JP 2007 216481 A, die JP 2006 056216 A und die JP 2006 056215 A zeigen jeweils ein Herstellungsverfahren für eine Harzplatte.

Die JP 2008 246866 A beschreibt ein Verfahren zur Herstellung einer sehr glatten Harzfolie, die feine Partikel enthält.

Die EP 0 287 551 A1 zeigt ein Verfahren zum Überwachen und Steuern der Wandstärke eines extrudierten Profils aus erhitztem Polymermaterial, das aus einer Extrusionsdüse austritt.

Die DE 10 2006 012417 A1 beschreibt eine Vorrichtung und ein Verfahren zur Regulierung der Folientemperatur bei der Folienherstellung.

Vor diesem Hintergrund besteht eine Aufgabe der vorliegenden Erfindung darin, ein verbessertes Verfahren zur Fertigungskontrolle zur Verfügung zu stellen. Demgemäß wird ein Verfahren zur Fertigungskontrolle eines extrudierten Kunststoffprodukts vorgeschlagen. Das Verfahren umfasst die folgenden Schritte: Erfassen einer ersten Ist-Temperatur eines an dem Kunststoffprodukt vorgesehenen Messbereichs an einer ersten Messstelle, Erfassen einer zweiten Ist-Temperatur des Messbereichs an einer zweiten Messstelle, die in einer Extrusionsrichtung des Kunststoffprodukts beabstandet von der ersten Messstelle angeordnet ist, Bestimmen einer Soll-Temperatur des Messbereichs an der zweiten Messstelle, wobei die Soll-Temperatur basierend auf der ersten Ist-Temperatur mit Hilfe einer Auskühlkurve des Kunststoffprodukts errechnet wird, und Ausgeben einer Information, ob die zweite Ist-Temperatur innerhalb oder außerhalb eines vorgegebenen Toleranzbereichs der Soll-Temperatur liegt.

Dadurch, dass die erste Ist-Temperatur und die zweite Ist-Temperatur kontinuierlich überwacht werden können und die zweite Ist-Temperatur mit der Soll-Temperatur verglichen werden kann, ist im Betrieb einer Extrusionsanlage zum Herstellen des Kunststoffprodukts eine 100%-Fertigungskontrolle möglich. Abweichungen der zweiten Ist-Temperatur von der Soll-Temperatur weisen auf eine Wandstärkenänderung an dem Kunststoffprodukt hin. Durch ein Nachregeln der Extrusionsanlage können diese Wandstärkenänderungen in einem Toleranzbereich einer Soll-Wandstärke gehalten werden. Somit ist eine kontinuierliche Wandstärkenüberwachung, insbesondere eine Inline-Wandstärkenkontrolle, möglich. Auf ein zeitaufwändiges Entnehmen von Stichproben kann verzichtet werden. Der Betrieb der Extrusionsanlage kann während der Fertigungskontrolle ununterbrochen weiterlaufen. Veränderungen der Ist-Temperaturen können kontinuierlich protokolliert werden.

Das Bestimmen der Soll-Temperatur des Messbereichs an der zweiten Messstelle kann ein Berechnen derselben anhand der ersten Ist-Temperatur umfassen. Das heißt, bei einer bevorzugten Weiterbildung des Verfahrens umfasst dieses die folgenden Schritte: Erfassen einer ersten Ist-Temperatur eines an dem Kunststoffprodukt vorgesehenen Messbereichs an einer ersten Messstelle, Erfassen einer zweiten Ist-Temperatur des Messbereichs an einer zweiten Messstelle, die in einer Extrusionsrichtung des Kunststoffprodukts beabstandet von der ersten Messstelle angeordnet ist, Errechnen einer Soll-Temperatur des Messbereichs an der zweiten Messstelle anhand der ersten Ist-Temperatur, und Ausgeben einer Information, ob die zweite Ist-Temperatur innerhalb oder außerhalb eines vorgegebenen Toleranzbereichs der Soll-Temperatur liegt.

Alternativ kann die Bestimmung der Soll-Temperatur auch dadurch erfolgen, dass die Soll-Temperatur anhand eines Produktionsversuchs bestimmt wird, der als Referenz verwendet wird. In diesem Fall wird die Soll-Temperatur des Messbereichs an der zweiten Messstelle bevorzugt nicht errechnet. Das heißt, die zweite Ist-Temperatur des Messbereichs an der zweiten Messstelle wird insbesondere nicht mit errechneten Werten der Soll-Temperatur verglichen, sondern mit tatsächlich während einer Musterproduktion ermittelten Werten der Soll-Temperatur.

Das Kunststoffprodukt ist vorzugsweise ein Wellschlauch oder Wellrohr beziehungsweise kann als Wellschlauch oder als Wellrohr bezeichnet werden. Das Verfahren kann jedoch auch für Glattschläuche oder Glattrohre verwendet werden. Das Verfahren kann darüber hinaus für Kunststoffprodukte mit beliebigem Querschnitt, beispielsweise mit einem L-förmigen oder I-förmigen Querschnitt, eingesetzt werden. Es kann eine beliebige Anzahl an Messstellen vorgesehen sein, an denen eine beliebige Anzahl an Ist-Temperaturen ermittelt werden kann. Vorzugsweise sind jedoch zumindest die erste Messstelle und die zweite Messstelle vorgesehen. Das Kunststoffprodukt ist vorzugsweise ein Endlosprodukt, das auf eine gewünschte Länge abgelängt werden kann. Das Verfahren wird insbesondere an oder mit einer Extrusionsanlage durchgeführt. Das Verfahren kann auch einen Schritt des Fertigens, insbesondere des Extrudierens, des Kunststoffprodukts umfassen. In diesem Fall ist das Verfahren insbesondere ein Verfahren zum Extrudieren des Kunststoffprodukts.

Das Erfassen der zweiten Ist-Temperatur und das Bestimmen, insbesondere das Errechnen, der Soll-Temperatur können gleichzeitig oder nacheinander durchgeführt werden. Dabei kann insbesondere das Errechnen der Soll-Temperatur vor oder während dem Erfassen der zweiten Ist-Temperatur oder danach durchgeführt werden. Die ausgegebene Information kann beispielsweise mit Hilfe eines Bildschirms oder Displays ausgegeben werden, so dass Betriebspersonal umgehend auf Abweichungen der zweiten Ist-Temperatur von dem Toleranzbereich der Soll-Temperatur reagieren kann. Die Information kann auch dazu verwendet werden, Anlagenparameter der Extrusionsanlage automatisiert einzustellen und/oder zu regeln, so dass die zweite Ist-Temperatur im Betrieb der Extrusionsanlage stets innerhalb des vorgegebenen Toleranzbereichs der Soll-Temperatur gehalten wird. Während des Verfahrens, das heißt, im Betrieb der Extrusionsanlage, wird der Messbereich in der Extrusionsrichtung von der ersten Messstelle zu der zweiten Messstelle gefördert oder transportiert.

Anhand der ersten Ist-Temperatur und der zweiten Soll-Temperatur können Rückschlüsse auf eine Wandstärke des Kunststoffprodukts gezogen werden. Ferner können anhand einer ermittelten Abweichung der zweiten Ist-Temperatur von der errechneten Soll-Temperatur Rückschlüsse auf Wandstärkenveränderungen beziehungsweise Wandstärkenabweichungen gezogen werden. Das heißt, das Verfahren ist geeignet, die Wandstärke des Kunststoffprodukts im Betrieb der Extrusionsanlage kontinuierlich zu überwachen und diese bei Wandstärkenabweichungen gegebenenfalls nachzuregeln.

Vorzugsweise stehen die erste Messstelle und die zweite Messstelle bezüglich der Extrusionsrichtung fest, wobei die zweite Messstelle in Bezug auf die Extrusionsrichtung stromabwärts der ersten Messstelle angeordnet ist. Die erste Messstelle und die zweite Messstelle können wenige Zentimeter bis mehrere Meter voneinander beabstandet sein. Die Extrusionsrichtung ist definiert als eine Richtung in der die Extrusionsanlage das Kunststoffprodukt fördert. Die Extrusionsrichtung ist vorzugsweise parallel zu einer Symmetrieachse des Kunststoffprodukts orientiert. Die Extrusionsrichtung kann auch als Maschinenrichtung oder Fertigungsrichtung bezeichnet werden.

Die Soll-Temperatur wird basierend auf der ersten Ist-Temperatur mit Hilfe einer Auskühlkurve des Kunststoffprodukts errechnet.

Alternativ kann die Soll-Temperatur - wie zuvor erwähnt - auch anhand eines Kalibriervorgangs insbesondere während eines Produktionsversuchs bestimmt werden. Auch die Auskühlkurve kann anhand des Produktionsversuchs bestimmt werden. Die Auskühlkurve kann auch als Abkühlkurve oder Ausklingkurve bezeichnet werden. Mit Hilfe der Auskühlkurve kann ermittelt werden, welche Temperatur der Messbereich in einem definierten Abstand von der ersten Messstelle, insbesondere an der zweiten Messstelle, rechnerisch aufweist. Die Auskühlkurve wird beispielsweise anhand von Materialparametern des verwendeten Kunststoffmaterials und/oder Anlagenparametern der Extrusionsanlage, wie beispielsweise einer Drehzahl eines Extruders und/oder einer Schmelzepumpe der Extrusionsanlage, einer Abzugsgeschwindigkeit des Kunststoffprodukts, einer Temperatur von Heizpatronen eines Spritzkopfs oder dergleichen errechnet. Hierzu kann eine Recheneinrichtung vorgesehen sein. Die Recheneinrichtung kann beispielsweise ein Personal Computer oder ein Industriecomputer sein. Die Recheneinrichtung ist insbesondere mit der Ausgabeeinrichtung wirkverbunden. Die Ausgabeeinrichtung kann Teil der Recheneinrichtung sein.

Gemäß einer weiteren Ausführungsform wird die erste Ist-Temperatur an der ersten Messstelle in der Extrusionsrichtung nach einem Corrugator einer Extrusionsanlage erfasst.

Hierdurch kann das Kunststoffprodukt nach dem Anformen von Wellenbergen und Wellentälern an dasselbe kontinuierlich überwacht werden. Der Corrugator ist optional. Die erste Messstelle kann alternativ auch nach einer Abzugseinrichtung zum Abziehen des Kunststoffprodukts angeordnet sein. In diesem Fall kann das Kunststoffprodukt beispielsweise ein Glattschlauch, Glattrohr oder dergleichen sein.

Gemäß einer weiteren Ausführungsform werden die erste Ist-Temperatur und die zweite Ist-Temperatur mit Hilfe einer berührungslos arbeitenden Erfassungseinrichtung erfasst.

Die Erfassungseinrichtung kann eines oder mehrere berührungslos arbeitende Erfassungselemente aufweisen. Die Erfassungselemente können jeweils als Infrarotkamera ausgebildet sein oder jeweils eine Infrarotkamera umfassen. Dabei können die erste Ist-Temperatur und die zweite Ist-Temperatur bei einem ausreichend großen Erfassungsbereich des Erfassungselements, das heißt, dann, wenn die erste Messstelle und die zweite Messstelle nicht zu weit voneinander beabstandet sind, mit nur einem Erfassungselement überwacht werden. Bei einer Ausführungsform eines Erfassungselements als Infrarotkamera mit einem Weitwinkelobjektiv können die erste Messstelle und die zweite Messstelle beispielsweise auch nur Teil eines Infrarotbildes sein.

Gemäß einer weiteren Ausführungsform wird mit Hilfe der ersten Ist-Temperatur und/oder der zweiten Ist-Temperatur eine Wandstärke des Kunststoffprodukts errechnet.

Die Wandstärke kann beispielsweise anhand der jeweiligen Ist-Temperatur, Materialparametern des verwendeten Kunststoffmaterials und Anlagenparametern der Extrusionsanlage errechnet werden. Dabei kann jeder Ist-Temperatur eine definierte Wandstärke zugeordnet werden. Hierbei kann sowohl eine Wandstärke des Kunststoffprodukts an den Wellentälern, an den Wellenbergen oder an Flanken der Wellenberge und Wellentäler ermittelt werden. Hierdurch ist eine umfassende Überwachung des Kunststoffprodukts möglich.

Gemäß einer weiteren Ausführungsform wird für den Fall, dass die zweite Ist-Temperatur außerhalb und oberhalb des Toleranzbereichs der Soll-Temperatur liegt, die Information ausgegeben, dass eine Ist-Wandstärke des Kunststoffprodukts an dem Messbereich eine vorgegebene Soll-Wandstärke des Kunststoffprodukts an dem Messbereich überschreitet.

Der Toleranzbereich wird mit Hilfe einer unteren oder ersten Toleranzkurve und einer oberen oder zweiten Toleranzkurve definiert. Die Auskühlkurve liegt insbesondere zwischen den beiden Toleranzkurven. Für den Fall, dass die zweite Ist-Temperatur außerhalb und oberhalb des Toleranzbereichs der Soll-Temperatur, das heißt, oberhalb der zweiten Toleranzkurve liegt, gibt die Ausgabeeinrichtung insbesondere die Information aus, dass die Ist-Wandstärke des Kunststoffprodukts die vorgegebene Soll-Wandstärke und insbesondere einen Toleranzbereich der Soll-Wandstärke überschreitet. Das heißt, falls die zweite Ist-Temperatur deutlich über der errechneten Soll-Temperatur an der zweiten Messstelle liegt, ist insbesondere davon auszugehen, dass an dem Kunststoffprodukt, insbesondere an dem Messbereich, eine Materialansammlung vorliegt, die langsamer abkühlt als mit Hilfe der Auskühlkurve bestimmt oder errechnet. Die Extrusionsanlage kann dann anhand der Information mit Hilfe einer Steuer- und/oder Regeleinrichtung derselben so angesteuert und/oder nachgeregelt werden, dass die zweite Ist-Temperatur beziehungsweise die Ist-Wandstärke wieder innerhalb des Toleranzbereichs der Soll-Temperatur beziehungsweise des Toleranzbereichs der Soll-Wandstärke liegt.

Gemäß einer weiteren Ausführungsform wird für den Fall, dass die zweite Ist-Temperatur außerhalb und unterhalb des Toleranzbereichs der Soll-Temperatur liegt, die Information ausgegeben, dass die Ist-Wandstärke an dem Messbereich die vorgegebene Soll-Wandstärke an dem Messbereich unterschreitet.

Für den Fall, dass die zweite Ist-Temperatur außerhalb und unterhalb des Toleranzbereichs der Soll-Temperatur liegt, gibt die Ausgabeeinrichtung insbesondere die Information aus, dass die Ist-Wandstärke die Soll-Wandstärke und insbesondere den Toleranzbereich der Soll-Wandstärke unterschreitet. Das heißt, wenn die zweite Ist-Temperatur an dem zweiten Messbereich deutlich unter der errechneten Soll-Temperatur liegt, kann davon ausgegangen werden, dass eine Materialausdünnung vorliegt, die dazu führt, dass sich das Kunststoffprodukt an dem Messbereich schneller abkühlt als mit Hilfe der Auskühlkurve bestimmt oder errechnet. Die Extrusionsanlage kann dann - wie zuvor schon ausgeführt - anhand der Information mit Hilfe der Steuer- und/oder Regeleinrichtung so angesteuert und/oder nachgeregelt werden, dass die zweite Ist-Temperatur beziehungsweise die Ist-Wandstärke wieder innerhalb des Toleranzbereichs der Soll-Temperatur beziehungsweise des Toleranzbereichs der Soll-Wandstärke liegt.

Gemäß einer weiteren Ausführungsform wird eine Extrusionsanlage zum Extrudieren des Kunststoffprodukts so nachgeregelt, dass die Ist-Wandstärke an dem Messbereich stets innerhalb eines vorgegebenen Toleranzbereichs der Soll-Wandstärke liegt.

Der Toleranzbereich kann beispielsweise Bruchteile von 1/10 (ein Zehntel) Millimetern bis wenige 1/10 Millimeter umfassen. Beispielsweise können an einem Spritzkopf der Extrusionsanlage Stellelemente vorgesehen sein, die es ermöglichen, einen Dorn des Spritzkopfs automatisiert relativ zu einem Mundstück des Spritzkopfs zu zentrieren, so dass umlaufend um das Kunststoffprodukt stets der vorgegebene Toleranzbereich der Soll-Wandstärke eingehalten wird.

Gemäß einer weiteren Ausführungsform werden die erste Ist-Temperatur und/oder die zweite Ist-Temperatur an mehreren an dem Kunststoffprodukt vorgesehenen Messbereichen erfasst, wobei die Messbereiche gleichmäßig um das Kunststoffprodukt herum verteilt angeordnet sind.

Die Anzahl der Messbereiche ist beliebig. Vorzugsweise sind zumindest drei, besonders bevorzugt vier Messbereiche vorgesehen, die beispielsweise um 90° zueinander versetzt positioniert sind. Alternativ kann auch ein einziger, ringförmig um das Kunststoffprodukt umlaufender, Messbereich vorgesehen sein.

Weiterhin wird zur Lösung der Aufgabe eine Vorrichtung zur Fertigungskontrolle eines extrudierten Kunststoffprodukts gemäss dem Anspruch 9 vorgeschlagen.

Das Bestimmen der Soll-Temperatur des Messbereichs an der zweiten Messstelle kann - wie zuvor erwähnt - ein Berechnen derselben anhand der ersten Ist-Temperatur umfassen. Das heißt, bei einer bevorzugten Weiterbildung der Vorrichtung umfasst diese eine Erfassungseinrichtung zum Erfassen einer ersten Ist-Temperatur eines an dem Kunststoffprodukt vorgesehenen Messbereichs an einer ersten Messstelle und zum Erfassen einer zweiten Ist-Temperatur des Messbereichs an einer zweiten Messstelle, die in einer Extrusionsrichtung des Kunststoffprodukts beabstandet von der ersten Messstelle angeordnet ist, eine Recheneinrichtung zum Errechnen einer Soll-Temperatur des Messbereichs an der zweiten Messstelle anhand der ersten Ist-Temperatur, und eine Ausgabeeinrichtung zum Ausgeben einer Information, ob die zweite Ist-Temperatur innerhalb oder außerhalb eines vorgegebenen Toleranzbereichs der Soll-Temperatur liegt.

Alternativ kann - wie zuvor erwähnt - die Bestimmung der Soll-Temperatur auch dadurch erfolgen, dass die Soll-Temperatur anhand eines Produktionsversuchs bestimmt wird, der als Referenz verwendet wird. In diesem Fall wird die Soll-Temperatur der Messbereiche an der zweiten Messstelle mit Hilfe der Recheneinrichtung bevorzugt nicht errechnet. In diesem Fall errechnet die Recheneinrichtung die Soll-Temperatur TS nicht, sondern speichert die während der Musterproduktion ermittelten Werte ab, um diese dann insbesondere mit der zweiten Ist-Temperatur zu vergleichen. Die Recheneinrichtung kann auch als Computereinrichtung oder Speichereinrichtung bezeichnet werden oder als solche ausgebildet sein.

Mit Hilfe der Vorrichtung wird insbesondere das zuvor erläuterte Verfahren durchgeführt. Die Vorrichtung kann Teil der Extrusionsanlage zum Extrudieren des Kunststoffprodukts sein. Die Erfassungseinrichtung kann - wie zuvor erwähnt - zumindest eine oder mehrere Erfassungselemente in Form von Infrarotkameras aufweisen. Die Recheneinrichtung kann ein Personal Computer oder ein Industriecomputer sein oder einen derartigen umfassen. Die Ausgabeeinrichtung kann ein Bildschirm oder ein Display sein. Die Ausgabeeinrichtung kann auch eine Warnlampe oder ein Datenträger sein. Die Ausgabeeinrichtung kann Teil der Recheneinrichtung sein. Die Recheneinrichtung und/oder die Ausgabeeinrichtung können mit der Steuer- und/oder Regeleinrichtung der Extrusionsanlage gekoppelt sein, um die Extrusionsanlage in Abhängigkeit der von der Ausgabeeinrichtung ausgegebenen Information anzusteuern und/oder nachzuregeln.

Gemäß einer Ausführungsform umfasst die Erfassungseinrichtung ein erstes berührungslos arbeitendes Erfassungselement, insbesondere eine erste Infrarotkamera, zum Erfassen der ersten Ist-Temperatur und ein zweites berührungslos arbeitendes Erfassungselement, insbesondere eine zweite Infrarotkamera, zum Erfassen der zweiten Ist-Temperatur.

Das zweite Erfassungselement ist optional. Alternativ kann mit dem ersten Erfassungselement sowohl die erste Ist-Temperatur als auch die zweite Ist-Temperatur erfasst werden. Hierdurch kann die Vorrichtung besonders kostengünstig aufgebaut werden.

Gemäß einer weiteren Ausführungsform umfasst die Erfassungseinrichtung mehrere erste Erfassungselemente, die gleichmäßig um das Kunststoffprodukt herum verteilt angeordnet sind, und/oder mehrere zweite Erfassungselemente, die gleichmäßig um das Kunststoffprodukt herum verteilt angeordnet sind.

Die Anzahl der Erfassungselemente ist beliebig. Beispielsweise sind drei oder vier erste Erfassungselemente und/oder drei oder vier zweite Erfassungselemente vorgesehen. Die Erfassungselemente sind jeweils gleichmäßig um einen Umfang des Kunststoffprodukts verteilt angeordnet. Die Erfassungselemente können dabei derart angeordnet sein, dass die Erfassungselemente senkrecht zu der Symmetrieachse des Kunststoffprodukts ausgerichtet sind. Hierdurch können insbesondere die Wellenberge und Wellentäler des Kunststoffprodukts erfasst werden. Alternativ können die Erfassungselemente auch in einem Neigungswinkel schräg zu der Symmetrieachse angeordnet sein. Hierdurch können auch die Flanken des Kunststoffprodukts, insbesondere die Flanken der Wellenberge, erfasst werden. Darüber hinaus können auch einige Erfassungselemente senkrecht und einige Erfassungselemente schräg zu der Symmetrieachse angeordnet sein. Hierdurch ist eine umfassende Überwachung des Kunststoffprodukts möglich. Die Flanken der Wellenberge können bei geeigneter Ausführung eines Erfassungselements als Infrarotkamera auch mit Hilfe eines Weitwinkelobjektivs erfasst werden. Dadurch ist dann im "Bilddurchlauf" des Kunststoffprodukts zuerst eine gegen die Extrusionsrichtung orientierte Flanke zu sehen, im weiteren Verlauf eine zweite, in Extrusionsrichtung liegende Flanke.

Ferner wird eine Extrusionsanlage zum Extrudieren eines Kunststoffprodukts vorgeschlagen. Die Extrusionsanlage umfasst einen Extruder und eine dem Extruder in der Extrusionsrichtung nachgeschaltete derartige Vorrichtung.

Insbesondere ist die Vorrichtung in der Extrusionsrichtung dem Extruder nachgeschaltet. Die Extrusionsanlage kann neben dem Extruder noch eine optionale Schmelzepumpe umfassen. Der Extruder kann ein Einschneckenextruder oder ein Zweischneckenextruder sein. Die Extrusionsanlage kann auch mehr als einen Extruder aufweisen. In diesem Fall ist die Extrusionsanlage als Mehrkomponenten-Extrusionsanlage ausgebildet. Die Extrusionsanlage kann jedoch auch eine Einkomponenten-Extrusionsanlage sein und umfasst dann nur einen Extruder.

Gemäß einer Ausführungsform umfasst die Extrusionsanlage ferner einen Corrugator, der zwischen dem Extruder und der Vorrichtung angeordnet ist.

Der Corrugator ist optional. Für den Fall, dass kein Corrugator vorgesehen ist, ist das Kunststoffprodukt bevorzugt ein Glattschlauch oder ein Glattrohr. Der Corrugator umfasst eine Vielzahl an Formbacken zum Anformen der Wellentäler und Wellenberge an das Kunststoffprodukt. Die Formbacken werden paarweise entlang von Führungsbahnen geführt, um dem Kunststoffprodukt die gewünschte Form zu geben.

Gemäß einer weiteren Ausführungsform umfasst die Extrusionsanlage ferner eine Steuer- und/oder Regeleinrichtung, die in Abhängigkeit von der von der Ausgabeeinrichtung ausgegebenen Information die Extrusionsanlage so nachregelt, dass die zweite Ist-Temperatur im Betrieb der Extrusionsanlage stets innerhalb des vorgegebenen Toleranzbereichs der Soll-Temperatur liegt.

Das heißt auch insbesondere, dass mit Hilfe der Steuer- und/oder Regeleinrichtung die Ist-Wandstärke des Kunststoffprodukts so eingestellt werden kann, dass diese stets im Toleranzbereich der Soll-Wandstärke liegt. Die Rechenrichtung und/oder die Ausgabeeinrichtung der Vorrichtung können Teil der Steuer- und/oder Regeleinrichtung sein oder mit dieser wirkverbunden sein. Die Steuer- und/oder Regeleinrichtung umfasst zum Nachregeln der Extrusionsanlage beispielsweise die zuvor erwähnten Stellelemente, die dazu eingerichtet sind, den Spritzkopf der Extrusionsanlage so einzustellen, dass die zweite Ist-Temperatur stets innerhalb des vorgegebenen Toleranzbereichs der Soll-Temperatur liegt beziehungsweise die Ist-Wandstärke stets innerhalb des Toleranzbereichs der Soll-Wandstärke liegt.

Weitere mögliche Implementierungen des Verfahrens, der Vorrichtung und/oder der Extrusionsanlage umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Verfahrens, der Vorrichtung und/oder Extrusionsanlage hinzufügen.

Weitere vorteilhafte Ausgestaltungen und Aspekte des Verfahrens, der Vorrichtung und/oder der Extrusionsanlage sind Gegenstand der Unteransprüche sowie der im Folgenden beschriebenen Ausführungsbeispiele des Verfahrens, der Vorrichtung und/oder der Extrusionsanlage. Im Weiteren werden das Verfahren, die Vorrichtung und/oder die Extrusionsanlage anhand von bevorzugten Ausführungsformen unter Bezugnahme auf die beigelegten Figuren näher erläutert.
Fig. 1 zeigt eine schematische Schnittansicht einer Ausführungsform eines Kunststoffprodukts;
Fig. 2 zeigt eine schematische Ansicht einer Ausführungsform einer Extrusionsanlage zum Extrudieren des Kunststoffprodukts gemäß Fig. 1;
Fig. 3 zeigt eine schematische Vorderansicht einer Ausführungsform eines Spritzkopfs für die Extrusionsanlage gemäß Fig. 2;
Fig. 4 zeigt eine schematische Seitenansicht einer Ausführungsform einer Vorrichtung zur Fertigungskontrolle für die Extrusionsanlage gemäß Fig. 2;
Fig. 5 zeigt eine Schnittansicht der Vorrichtung gemäß Fig. 4 an einer ersten Messstelle;
Fig. 6 zeigt eine weitere Schnittansicht der Vorrichtung gemäß Fig. 4 an einer zweiten Messstelle;
Fig. 7 zeigt eine schematische Ansicht einer Ausführungsform einer Auskühlkurve des Kunststoffprodukts gemäß Fig. 1;
Fig. 8 zeigt eine weitere schematische Schnittansicht des Kunststoffprodukts gemäß Fig. 1; und
Fig. 9 zeigt ein schematisches Blockdiagramm einer Ausführungsform eines Verfahrens zur Fertigungskontrolle des Kunststoffprodukts gemäß Fig. 1.

In den Figuren sind gleiche oder funktionsgleiche Elemente mit denselben Bezugszeichen versehen worden, sofern nichts anderes angegeben ist.

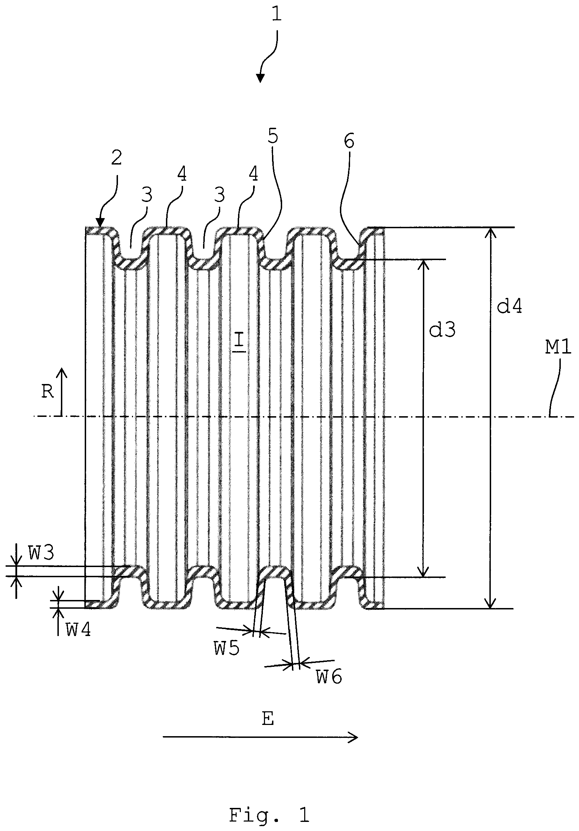

Die Fig. 1 zeigt eine schematische Schnittansicht einer Ausführungsform eines rohrförmigen oder schlauchförmigen Kunststoffprodukts 1, das mit Hilfe eines Extrusionsverfahrens hergestellt ist. Das Kunststoffprodukt 1 ist insbesondere ein Wellschlauch oder Wellrohr beziehungsweise kann auch als Wellschlauch oder Wellrohr bezeichnet werden.

Vorzugsweise ist das Kunststoffprodukt 1 ein Endlosprodukt, das auf eine gewünschte Länge abgelängt, beispielsweise abgesägt oder abgeschnitten, werden kann. Das Kunststoffprodukt 1 ist aus einem thermoplastisch verarbeitbaren Kunststoffmaterial, wie beispielsweise einem Polyethylen (PE), einem Polypropylen (PP), einem Acrylnitril-Butadien-Styrol (ABS) oder dergleichen gefertigt. Das Kunststoffprodukt 1 kann aus nur einer Komponente, das heißt, aus nur einem Kunststoffmaterial, oder aus mehreren Komponenten, das heißt, aus mehreren unterschiedlichen Kunststoffmaterialien, gefertigt sein.

Das Kunststoffprodukt 1 kann rotationssymmetrisch zu einer Mittel- oder Symmetrieachse M1 ausgebildet sein. Das Kunststoffprodukt 1 wird bei der Fertigung desselben mit Hilfe einer Extrusionsanlage in einer Extrusionsrichtung E extrudiert. Die Extrusionsrichtung E kann dabei in der Orientierung der Fig. 1 von links nach rechts oder von rechts nach links orientiert sein. Die Extrusionsrichtung E ist parallel zu der Symmetrieachse M1 orientiert. Die Extrusionsrichtung E kann auch als Fertigungsrichtung oder Maschinenrichtung bezeichnet werden.

Das Kunststoffprodukt 1 umfasst weiterhin eine Radialrichtung R, die von der Symmetrieachse M1 weg orientiert ist. Die Radialrichtung R ist senkrecht zu der Symmetrieachse M1 positioniert. Insbesondere ist die Radialrichtung R von der Symmetrieachse M1 weg auf eine Wandung 2 des Kunststoffprodukts 1 hinzu orientiert.

Das Kunststoffprodukt 1 beziehungsweise die Wandung 2 umfasst sich in der Extrusionsrichtung E abwechselnde Wellentäler 3 und Wellenberge 4, von denen in der Fig. 1 jeweils nur zwei mit einem Bezugszeichen versehen sind. Die Wellentäler 3 und die Wellenberge 4 sind so angeordnet, dass jeweils zwischen zwei Wellentälern 3 ein Wellenberg 4 und zwischen zwei Wellenbergen 4 ein Wellental 3 angeordnet ist. Die Wellentäler 3 und die Wellenberge 4 sind sowohl außenseitig als auch innenseitig, das heißt, einem Innenraum I des Kunststoffprodukts 1 zugewandt, an dem Kunststoffprodukt 1 vorgesehen.

Beispielsweise können die Wellentäler 3 und die Wellenberge 4 nach einem Extrudieren des Kunststoffprodukts 1 mit Hilfe eines sogenannten Corrugators an das Kunststoffprodukt 1 beziehungsweise an die Wandung 2 angeformt werden. Das Kunststoffprodukt 1 weist an den Wellentälern 3 jeweils einen Innendurchmesser d3 und an den Wellenbergen 4 jeweils einen Außendurchmesser d4 auf. Der Außendurchmesser d4 ist größer als der Innendurchmesser d3.

An den Wellentälern 3 weist die Wandung 2 eine Wandstärke W3 und an den Wellenbergen 4 weist die Wandung 2 eine Wandstärke W4 auf. Die Wandstärken W3, W4 können unterschiedlich groß oder gleich groß sein. Die Wellentäler 3 sind mit Hilfe von Flanken 5, 6 mit den Wellenbergen 4 verbunden. Das heißt, beidseits jedes Wellentals 3 beziehungsweise beidseits jedes Wellenbergs 4 ist jeweils eine Flanke 5, 6 vorgesehen. Die Flanken 5, 6 sind dabei einander zugewandt angeordnet. Eine jeweilige erste Flanke 5 weist eine Wandstärke W5 und eine jeweilige zweite Flanke 6 weist eine Wandstärke W6 auf. Die Wandstärken W5, W6 sind vorzugsweise gleich groß. Die Wandstärken W5, W6 können sich in ihrem Betrag von den Wandstärken W3, W4 unterscheiden oder gleich groß wie diese sein.

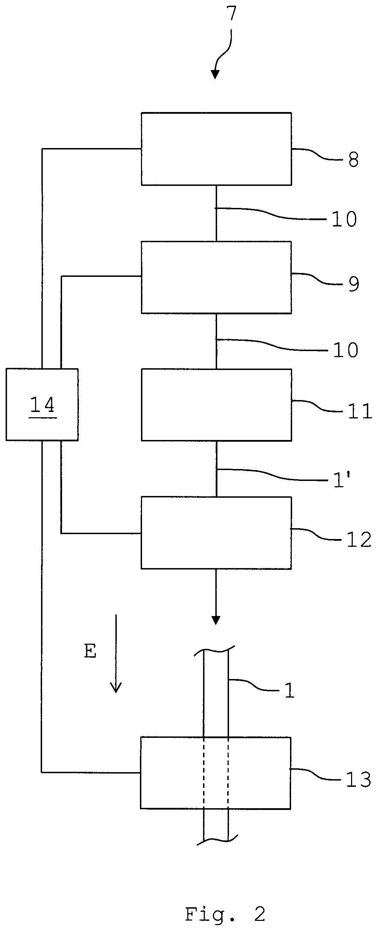

Die Fig. 2 zeigt eine schematische Ansicht einer Ausführungsform einer Extrusionsanlage 7 zum Herstellen des zuvor erläuterten Kunststoffprodukts 1. Die Extrusionsanlage 7 umfasst einen Extruder 8, der dazu eingerichtet ist, ein Kunststoffmaterial zu plastifizieren und einer Schmelzepumpe 9 zuzuführen. Das plastifizierte Kunststoffmaterial wird der Schmelzepumpe 9 als Schmelzestrom 10 zugeführt. Der Extruder 8 kann beispielsweise ein Einschneckenextruder oder auch ein Doppelschneckenextruder sein. Die Schmelzepumpe 9 ist optional. Die Schmelzepumpe 9 kann Pulsationen und ungleichmäßige Förderungen des aufgeschmolzenen Kunststoffmaterials verringern. Die Schmelzepumpe 9 führt den Schmelzestrom 10 einem Spritzkopf 11 der Extrusionsanlage 7 zu.

Vorzugsweise ist die Extrusionsanlage 7 eine Einkomponenten-Extrusionsanlage. Alternativ kann die Extrusionsanlage 7 auch eine Mehrkomponenten-Extrusionsanlage sein. In diesem Fall kann die Extrusionsanlage 7 mehrere Extruder 8 und mehrere Schmelzepumpen 9 aufweisen, wobei dann unterschiedliche Schmelzeströme in dem Spritzkopf 11 zur Bildung des Kunststoffprodukts 1 zusammengeführt werden.

Dem Spritzkopf 11 in der Extrusionsrichtung E nachgelagert ist ein Corrugator 12 vorgesehen. Mit Hilfe des Corrugators 12 können an ein Rohteil 1' des Kunststoffprodukts 1 die Wellentäler 3 und Wellenberge 4 angeformt werden. Das Rohteil 1' ist ein Glattrohr oder Glattschlauch beziehungsweise kann als Glattrohr oder Glattschlauch bezeichnet werden. Der Corrugator 12 kann zum Anformen der Wellentäler 3 und der Wellenberge 4 eine Vielzahl umlaufender Formbacken aufweisen. Der Corrugator 12 ist optional. Für den Fall, dass das Kunststoffprodukt 1 ein Glattschlauch oder Glattrohr ist, das heißt, für den Fall, dass das Kunststoffprodukt 1 keine Wellentäler 3 und Wellenberge 4 aufweist, ist der Corrugator 12 verzichtbar. Mit Hilfe der Extrusionsanlage 7 wird das Kunststoffprodukt 1 als Endlosprodukt gefertigt und kann nach dem Corrugator 12 auf eine gewünschte Länge abgelängt, beispielsweise abgeschnitten oder abgesägt, werden.

Die Extrusionsanlage 7 umfasst weiterhin eine Vorrichtung 13 zur Fertigungskontrolle. Die Vorrichtung 13 ist in der Extrusionsrichtung E betrachtet nach dem Corrugator 12 positioniert. Durch die Vorrichtung 13 läuft das Kunststoffprodukt 1 mit den angeformten Wellentälern 3 und Wellenbergen 4 hindurch. Mit Hilfe der Vorrichtung 13 kann, wie nachfolgend noch erläutert, eine 100%-Qualitätskontrolle des Kunststoffprodukts 1 durchgeführt werden.

Die Extrusionsanlage 7 umfasst weiterhin eine Steuer- und/oder Regeleinrichtung 14, die mit dem Extruder 8, der Schmelzepumpe 9, dem Spritzkopf 11, dem Corrugator 12 und/oder der Vorrichtung 13 wirkverbunden sein kann. Mit Hilfe der Steuer- und/oder Regeleinrichtung 14 können Fertigungs- oder Anlagenparameter der Extrusionsanlage 7 eingestellt und/oder geregelt werden. Beispielsweise können mit Hilfe der Steuer- und/oder Regeleinrichtung 14 eine Drehzahl einer Schnecke des Extruders 8, eine Pumpendrehzahl der Schmelzepumpe 9, eine Temperatureinstellung des Spritzkopfs 11 und/oder eine Abzugsgeschwindigkeit des Corrugators 12 eingestellt und/oder geregelt werden.

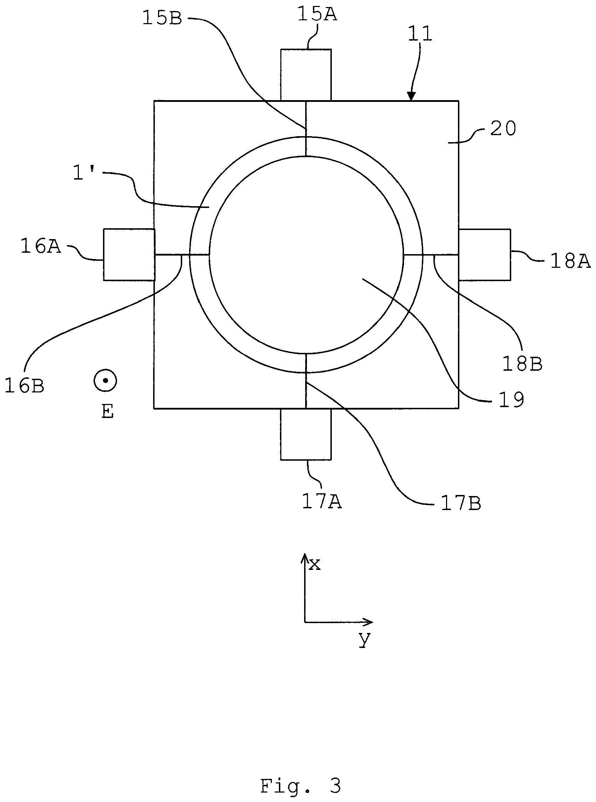

Weiterhin können mit Hilfe der Steuer- und/oder Regeleinrichtung 14, wie in der Fig. 3 gezeigt, Stellelemente 15A bis 18A des Spritzkopfs 11 so angesteuert werden, dass ein Dorn 19 des Spritzkopfs 11 relativ zu einem Mundstück 20 desselben positioniert und insbesondere relativ zu diesem zentriert werden kann. Hierzu sind beispielsweise vier Stellelemente 15A bis 18A vorgesehen, die als Elektromotoren ausgebildet sein können. Die Stellelemente 15A bis 18A sind jeweils um 90° versetzt angeordnet. Insbesondere können die Stellelemente 15A bis 18A mit Hilfe von Kopplungselementen 15B bis 18B, beispielsweise mit Hilfe von Gewindespindeln, mit dem Dorn 19 gekoppelt sein. Mit Hilfe der Stellelemente 15A bis 18A kann dann der Dorn 19 in einer x-Richtung x und einer y-Richtung y relativ zu dem Mundstück 20 positioniert werden.

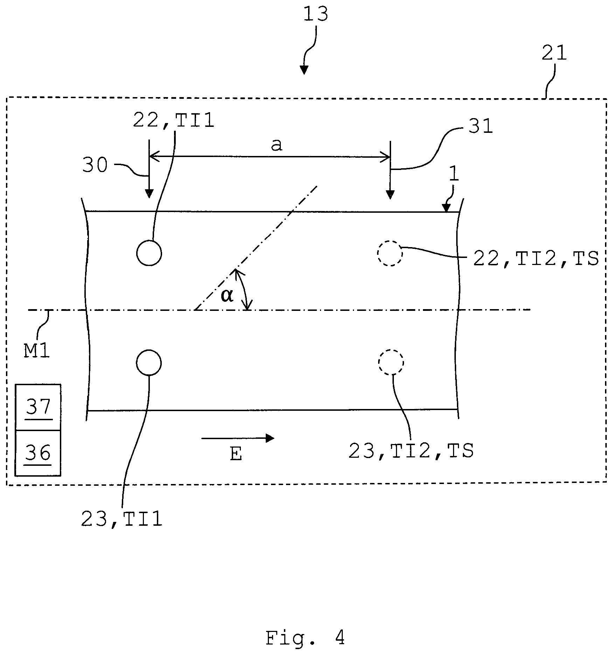

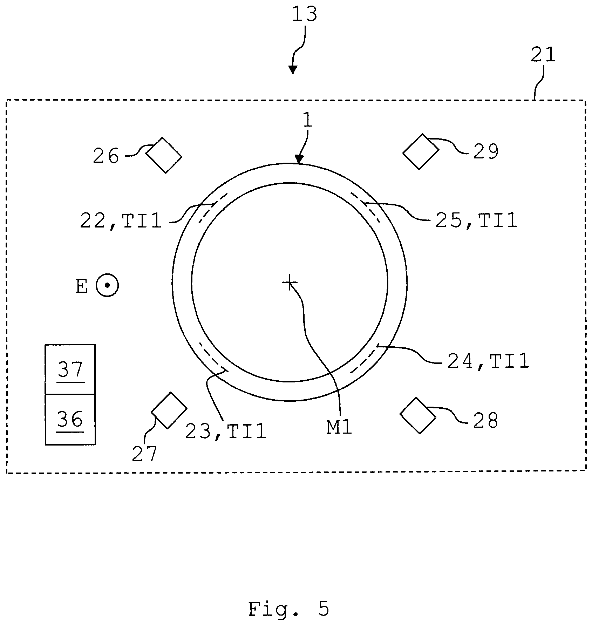

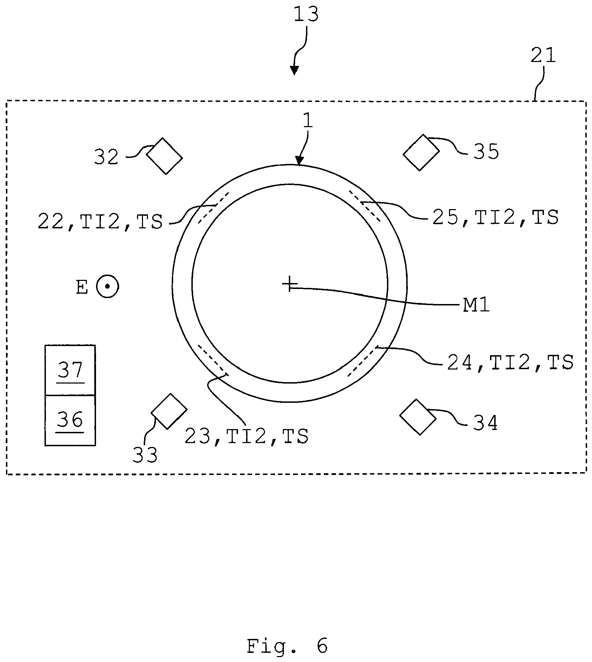

Die Vorrichtung 13 umfasst eine in den Fig. 4 bis 6 gezeigte Erfassungseinrichtung 21 zum Erfassen einer ersten Ist-Temperatur TI1 eines an dem Kunststoffprodukt 1 vorgesehenen Messbereichs 22. Der Messbereich 22 kann beispielsweise ein an dem Kunststoffprodukt 1 vorgesehener Messpunkt oder eine Messfläche sein. Der Messbereich 22 kann auch ringförmig um das Kunststoffprodukt 1 umlaufen. Es können auch mehrere Messbereiche 22 bis 25 (Fig. 5, Fig. 6) vorgesehen sein, die gleichmäßig um einen Umfang des Kunststoffprodukts 1 verteilt angeordnet sind.

Beispielsweise können die Messbereiche 22 bis 25 jeweils um 90° versetzt positioniert sein. Die Erfassungseinrichtung 21 kann zum Erfassen der ersten Ist-Temperatur TI1 an den Messbereichen 22 bis 25 mehrere, beispielsweise vier, berührungslos arbeitende erste Erfassungselemente 26 bis 29 (Fig. 5) aufweisen. Die ersten Erfassungselemente 26 bis 29 können beispielsweise jeweils als Infrarotkameras ausgebildet sein oder jeweils eine Infrarotkamera umfassen. Eine Infrarotkamera oder Wärmebildkamera ist vorliegenden ein bildgebendes Gerät, das Infrarotstrahlung empfängt. Die empfangene Infrarotstrahlung liegt bevorzugt im Wellenlängenbereich von etwa 0,7 µm bis 1000 µm.

Die erste Ist-Temperatur TI1 wird an einer bezüglich der Extrusionsrichtung E feststehenden ersten Messstelle 30 erfasst. Die Fig. 5 zeigt eine Schnittansicht der Erfassungseinrichtung 21 an der ersten Messstelle 30. Weiterhin wird im Betrieb der Extrusionsanlage 7 eine zweite Ist-Temperatur TI2 der Messbereiche 22 bis 25 an einer zweiten Messstelle 31, die in der Extrusionsrichtung E beabstandet von der ersten Messstelle 30 angeordnet ist, erfasst. Die Fig. 6 zeigt eine Schnittansicht der Erfassungseinrichtung 21 an der zweiten Messstelle 31. Ein Abstand a zwischen der ersten Messstelle 30 und der zweiten Messstelle 31 kann wenige Zentimeter bis mehrere Meter betragen.

Beim Herstellen des Kunststoffprodukts 1 werden dann die Messbereiche 22 bis 25 von der ersten Messstelle 30 zu der zweiten Messstelle 31 gefördert. An der zweiten Messstelle 31 wird mit Hilfe der Erfassungseinrichtung 21 die zweite Ist-Temperatur TI2 erfasst. Zum Erfassen der zweiten Ist-Temperatur TI2 können, wie in der Fig. 6 gezeigt, zweite Erfassungselemente 32 bis 35 vorgesehen sein, die wie die ersten Erfassungselemente 26 bis 29 vorzugsweise gleichmäßig um einen Umfang des Kunststoffprodukts 1 verteilt angeordnet sind. Die zweiten Erfassungselemente 32 bis 35 können ebenfalls jeweils als Infrarotkameras ausgebildet sein oder jeweils eine Infrarotkamera umfassen. Die zweiten Erfassungselemente 32 bis 35 sind optional.

Alternativ zu den zweiten Erfassungselementen 32 bis 35 kann bei einem entsprechend großen Bildausschnitt der ersten Erfassungselemente 26 bis 29 die zweite Ist-Temperatur TI2 zusätzlich mit Hilfe der ersten Erfassungselemente 26 bis 29 auch an der zweiten Messstelle 31 ermittelt werden. Die ersten Erfassungselemente 26 bis 29 oder zumindest ein Teil der ersten Erfassungselemente 26 bis 29 und/oder die zweiten Erfassungselemente 32 bis 35 oder zumindest ein Teil der zweiten Erfassungselemente 32 bis 35 können senkrecht zu der Symmetrieachse M1 oder in einem Neigungswinkel α (Fig. 4) relativ zu dieser geneigt sein. Hierdurch können sowohl die Wellentäler 3 und die Wellenberge 4 als auch die Flanken 5, 6 der Wandung 2 des Kunststoffprodukts 1 mit Hilfe der Erfassungseinrichtung 21 erfasst werden.

Die Vorrichtung 13 umfasst weiterhin eine Recheneinrichtung 36. Die Recheneinrichtung 36 kann Teil der Steuer- und/oder Regeleinrichtung 14 sein oder mit dieser gekoppelt sein. Die Recheneinrichtung 36 kann beispielsweise ein Personal Computer oder Industriecomputer sein oder einen derartigen umfassen. Mit Hilfe der Recheneinrichtung 36 kann eine Soll-Temperatur TS (Fig. 4, Fig. 6) der Messbereiche 22 bis 25 an der zweiten Messstelle 31 bestimmt werden. Insbesondere kann mit Hilfe der Recheneinrichtung 36 basierend auf der an der ersten Messstelle 30 erfassten ersten Ist-Temperatur TI1 die Soll-Temperatur TS der Messbereiche 22 bis 25 an der zweiten Messstelle 31 errechnet werden. Das heißt, die Bestimmung der Soll-Temperatur TS der Messbereiche 22 bis 25 an der zweiten Messstelle 31 umfasst eine Berechnung derselben.

Alternativ kann die Bestimmung der Soll-Temperatur TS der Messbereiche 22 bis 25 an der zweiten Messstelle 31 auch dadurch erfolgen, dass die Soll-Temperatur TS anhand eines Produktionsversuchs bestimmt wird, der als Referenz verwendet wird. In diesem Fall wird die Soll-Temperatur TS der Messbereiche 22 bis 25 an der zweiten Messstelle 31 nicht errechnet. Das heißt, die zweite Ist-Temperatur TI2 der Messbereiche 22 bis 25 an der zweiten Messstelle 31 wird nicht mit errechneten Werten der Soll-Temperatur TS verglichen, sondern mit tatsächlich während einer Musterproduktion ermittelten Werten der Soll-Temperatur TS. In diesem Fall errechnet die Recheneinrichtung 36 die Soll-Temperatur TS nicht sondern speichert die während der Musterproduktion ermittelten Werte der Soll-Temperatur TS ab.

Die Berechnung der Soll-Temperatur TS erfolgt beispielsweise anhand von Materialparametern des verwendeten Kunststoffmaterials, Anlagenparametern der Extrusionsanlage 7, wie beispielsweise einer Drehzahl oder Fördergeschwindigkeit des Extruders 8 und/oder der Schmelzepumpe 9, einer Temperatur am Spritzkopf 11 und/oder einer Abzugsgeschwindigkeit des Kunststoffprodukts 1.

Die Vorrichtung 13 weist ferner eine Ausgabeeinrichtung 37 auf, die mit der Recheneinrichtung 36 gekoppelt ist. Die Ausgabeeinrichtung 37 kann beispielsweise eine Warnlampe, ein Display, ein Bildschirm oder auch ein Datenträger sein. Die Ausgabeeinrichtung 37 kann Teil der Recheneinrichtung 36 sein.

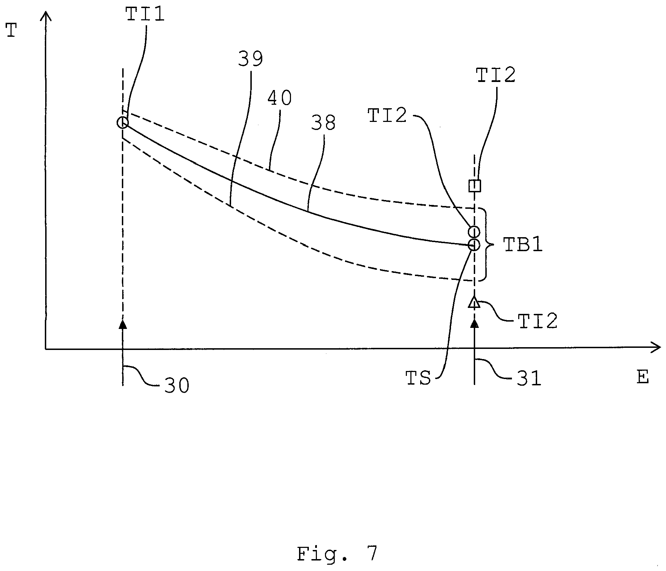

Zum Errechnen der Soll-Temperatur TS kann beispielsweise eine in der Fig. 7 schematisch gezeigte Ausklingkurve oder Auskühlkurve 38 des Kunststoffprodukts 1 verwendet werden. Bei der schematischen Darstellung der Auskühlkurve 38 gemäß der Fig. 7 ist in einer horizontalen Richtung oder x-Richtung die Extrusionsrichtung E und in einer vertikalen Richtung oder y-Richtung die Temperatur T aufgetragen. Weiterhin sind in der Fig. 7 eine untere oder erste Toleranzkurve 39 und eine obere oder zweite Toleranzkurve 40 gezeigt. Die Toleranzkurven 39, 40 definieren einen Toleranzbereich TB1 der Soll-Temperatur TS, insbesondere an der zweiten Messstelle 31.

Die Toleranzkurven 39, 40 können sich ausgehend von der zweiten Messstelle 31 in Richtung der ersten Messstelle 30, also entgegen der Extrusionsrichtung E, an die Auskühlkurve 38 annähern. Das heißt umgekehrt, dass sich in der Extrusionsrichtung E betrachtet die Toleranzkurven 39, 40 von der Auskühlkurve 38 kontinuierlich entfernen. Somit kann sich auch der Toleranzbereich TB1 in der Extrusionsrichtung E verändern. Die Auskühlkurve 38 kann anhand der ersten Ist-Temperatur TI1 errechnet werden. Alternativ kann die Auskühlkurve 38 - wie zuvor schon mit Bezug auf die Soll-Temperatur TS erwähnt - anhand eines Produktionsversuchs bestimmt oder ermittelt werden.

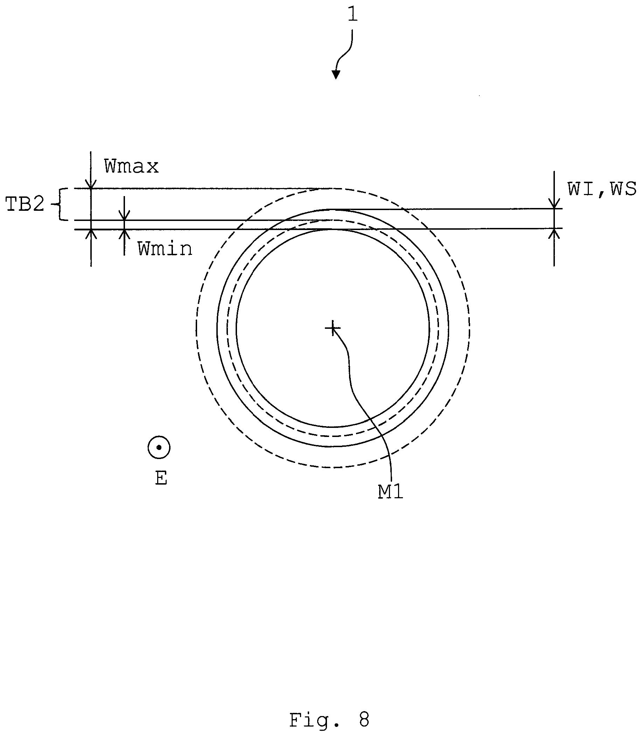

Die Fig. 8 zeigt eine weitere schematische Schnittansicht des Kunststoffprodukts 1. Nach dem Corrugator 12 entspricht eine Ist-Wandstärke WI der Wandung 2 des Kunststoffprodukts 1 idealerweise einer Soll-Wandstärke WS desselben. Für die Soll-Wandstärke WS kann, wie für die Soll-Temperatur TS, ein Toleranzbereich TB2 vorgegeben sein, welchen die Ist-Wandstärke WI idealerweise weder unterschreitet noch überschreitet. Die Ist-Wandstärke WI kann dabei für jede der Wandstärken W3 bis W6 stehen. Der Toleranzbereich TB2 der Soll-Wandstärke WS ergibt sich dabei aus einer vorzugebenden minimal zulässigen Wandstärke Wmin und einer vorzugebenden maximal zulässigen Wandstärke Wmax.

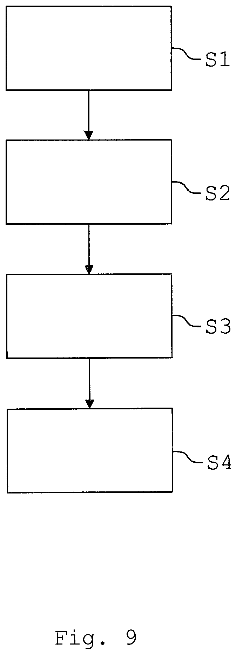

Die Funktionsweise der Extrusionsanlage 7 mit der Vorrichtung 13 wird nachfolgend anhand der Fig. 7 und eines in der Fig. 9 als Blockdiagramm schematisch dargestellten Verfahrens zur Fertigungskontrolle des Kunststoffprodukts 1 erläutert. Das Verfahren umfasst einen Schritt S1 des Erfassens der ersten Ist-Temperatur TI1 der ersten Messbereiche 22 bis 25 an der ersten Messstelle 30. Hierzu wird die erste Ist-Temperatur TI1 mit Hilfe der Erfassungseinrichtung 21 erfasst. Die erste Ist-Temperatur TI1 ist in der Fig. 7 als Kreis dargestellt.

In einem Schritt S2 wird mit Hilfe der Erfassungseinrichtung 21 die zweite Ist-Temperatur TI2 der Messbereiche 22 bis 25 an der zweiten Messstelle 31 erfasst. Beispielsweise liegt die zweite Ist-Temperatur TI2, wie in der Fig. 7 mit Hilfe eines Kreises gezeigt, zwar nicht auf der Auskühlkurve 38, jedoch innerhalb des Toleranzbereichs TB1.

In einem Schritt S3, der vor, gleichzeitig mit oder nach dem Schritt S2 durchgeführt werden kann, wird die Soll-Temperatur TS an der zweiten Messstelle 31 bestimmt. Das Bestimmen kann ein Errechnen der Soll-Temperatur TS anhand der ersten Ist-Temperatur TI1 umfassen. Das Errechnen erfolgt mit Hilfe der Recheneinrichtung 36. Das Bestimmen der Soll-Temperatur TS kann auch mit Hilfe eines Produktionsversuchs erfolgen.

In einem Schritt S4 wird mit Hilfe der Ausgabeeinrichtung 37 eine Information ausgegeben, ob die zweite Ist-Temperatur TI2 innerhalb oder außerhalb des Toleranzbereichs TB1 der Soll-Temperatur TS liegt. Diese Information kann - wie zuvor erwähnt - beispielsweise als Anzeige auf einem Display oder Bildschirm angegeben werden. Die Information kann auch einem Datenträger zugeführt werden. Die Information kann ferner an die Steuer- und/oder Regeleinrichtung 14 weitergegeben werden, um die Extrusionsanlage 7 so zu regeln oder nachzuregeln, dass die zweite Ist-Temperatur TI2 stets innerhalb des vorgegebenen Toleranzbereichs TB1 liegt.

Für den Fall, dass die zweite Ist-Temperatur TI2, wie in der Fig. 7 mit Hilfe eines Rechtecks dargestellt, außerhalb und oberhalb des Toleranzbereichs TB1, das heißt, oberhalb der zweiten Toleranzkurve 40 liegt, gibt die Ausgabeeinrichtung 37 die Information aus, dass die Ist-Wandstärke WI des Kunststoffprodukts 1 die vorgegebene Soll-Wandstärke WS und insbesondere den Toleranzbereich TB2 überschreitet. Das heißt, falls die zweite Ist-Temperatur TI2 deutlich über der errechneten Soll-Temperatur TS an der zweiten Messstelle 31 liegt, ist davon auszugehen, dass an dem Kunststoffprodukt 1 eine Materialansammlung vorliegt, die langsamer abkühlt als mit Hilfe der Auskühlkurve 38 bestimmt oder errechnet. Die Extrusionsanlage 7 kann dann anhand der Information mit Hilfe der Steuer- und/oder Regeleinrichtung 14 so nachgeregelt werden, dass die zweite Ist-Temperatur TI2 beziehungsweise die Ist-Wandstärke WI wieder innerhalb des Toleranzbereichs TB1 beziehungsweise des Toleranzbereichs TB2 liegt.

Für den Fall, dass die zweite Ist-Temperatur TI2, wie in der Fig. 7 mit Hilfe eines Dreiecks dargestellt, außerhalb und unterhalb des Toleranzbereichs TB1, das heißt, unterhalb der ersten Toleranzkurve 39, liegt, gibt die Ausgabeeinrichtung 37 die Information aus, dass die Ist-Wandstärke WI die Soll-Wandstärke WS und insbesondere den Toleranzbereich TB2 unterschreitet. Das heißt, wenn die zweite Ist-Temperatur TI2 an der zweiten Messstelle 31 deutlich unter der bestimmten oder errechneten Soll-Temperatur TS liegt, kann davon ausgegangen werden, dass eine Materialausdünnung vorliegt, die dazu führt, dass sich das Kunststoffprodukt 1 an den Messbereichen 22 bis 25 schneller abkühlt als mit Hilfe der Auskühlkurve 38 bestimmt oder errechnet. Die Extrusionsanlage 7 kann dann anhand der Information mit Hilfe der Steuer- und/oder Regeleinrichtung 14 so nachgeregelt werden, dass die zweite Ist-Temperatur TI2 beziehungsweise die Ist-Wandstärke WI wieder innerhalb des Toleranzbereichs TB1 beziehungsweise des Toleranzbereichs TB2 liegt.

Die Vorrichtung 13 und das Verfahren können auch bei einer Extrusionsanlage 7 ohne einen Corrugator 12, beispielsweise zur Fertigungskontrolle eines Glattschlauchs oder Glattrohrs eingesetzt werden. Mit Hilfe der Vorrichtung 13 ist somit im Betrieb der Extrusionsanlage 7 kontinuierlich eine 100%ige Qualitätskontrolle des Kunststoffprodukts 1 möglich. Auf ein zeitaufwändiges Entnehmen von Stichproben des Kunststoffprodukts 1 kann verzichtet werden. Der Betrieb der Extrusionsanlage 7 kann während der Fertigungskontrolle ununterbrochen weiterlaufen. Veränderungen der Ist-Temperaturen TI1, TI2 und der Ist-Wandstärke WI können kontinuierlich protokolliert werden.

### BEZUGSZEICHENLISTE

- 1: Kunststoffprodukt
- 1': Rohteil
- 2: Wandung
- 3: Wellental
- 4: Wellenberg
- 5: Flanke
- 6: Flanke
- 7: Extrusionsanlage
- 8: Extruder
- 9: Schmelzepumpe
- 10: Schmelzestrom
- 11: Spritzkopf
- 12: Corrugator
- 13: Vorrichtung
- 14: Steuer- und/oder Regeleinrichtung
- 15A: Stellelement
- 15B: Kopplungselement
- 16A: Stellelement
- 16B: Kopplungselement
- 17A: Stellelement
- 17B: Kopplungselement
- 18A: Stellelement
- 18B: Kopplungselement
- 19: Dorn
- 20: Mundstück
- 21: Erfassungseinrichtung
- 22: Messbereich
- 23: Messbereich
- 24: Messbereich
- 25: Messbereich
- 26: Erfassungselement
- 27: Erfassungselement
- 28: Erfassungselement
- 29: Erfassungselement
- 30: Messstelle
- 31: Messstelle
- 32: Erfassungselement
- 33: Erfassungselement
- 34: Erfassungselement
- 35: Erfassungselement
- 36: Recheneinrichtung
- 37: Ausgabeeinrichtung
- 38: Auskühlkurve
- 39: Toleranzkurve
- 40: Toleranzkurve

- a: Abstand
- d3: Innendurchmesser
- d4: Außendurchmesser
- E: Extrusionsrichtung
- I: Innenraum
- M1: Symmetrieachse
- R: Radialrichtung
- S1: Schritt
- S2: Schritt
- S3: Schritt
- S4: Schritt
- TB1: Toleranzbereich
- TB2: Toleranzbereich
- TI1: Ist-Temperatur
- TI2: Ist-Temperatur
- TS: Soll-Temperatur
- WI: Ist-Wandstärke
- Wmax: Wandstärke
- Wmin: Wandstärke
- WS: Soll-Wandstärke
- W3: Wandstärke
- W4: Wandstärke
- W5: Wandstärke
- W6: Wandstärke
- x: x-Richtung
- y: y-Richtung
- α: Neigungswinkel

## Patentansprüche

1. Verfahren zur Fertigungskontrolle eines extrudierten Kunststoffprodukts (1) mit folgenden Schritten:
Erfassen (S1) einer ersten Ist-Temperatur (TI1) eines an dem Kunststoffprodukt (1) vorgesehenen Messbereichs (22 - 25) an einer ersten Messstelle (30),
Erfassen (S2) einer zweiten Ist-Temperatur (TI2) des Messbereichs (22 - 25) an einer zweiten Messstelle (31), die in einer Extrusionsrichtung (E) des Kunststoffprodukts (1) beabstandet von der ersten Messstelle (30) angeordnet ist,
Bestimmen (S3) einer Soll-Temperatur (TS) des Messbereichs (22 - 25) an der zweiten Messstelle (31), wobei die Soll-Temperatur (TS) basierend auf der ersten Ist-Temperatur (TI1) mit Hilfe einer Auskühlkurve (38) des Kunststoffprodukts (1) errechnet wird, und
Ausgeben (S4) einer Information, ob die zweite Ist-Temperatur (TI2) innerhalb oder außerhalb eines vorgegebenen Toleranzbereichs (TB1) der Soll-Temperatur (TS) liegt.

2. Verfahren nach Anspruch 1, wobei die erste Ist-Temperatur (TI1) an der ersten Messstelle (31) in der Extrusionsrichtung (E) nach einem Corrugator (12) einer Extrusionsanlage (7) erfasst wird.

3. Verfahren nach Anspruch 1 oder 2, wobei die erste Ist-Temperatur (TI1) und die zweite Ist-Temperatur (TI2) mit Hilfe einer berührungslos arbeitenden Erfassungseinrichtung (21) erfasst werden.

4. Verfahren nach einem der Ansprüche 1 - 3, wobei mit Hilfe der ersten Ist-Temperatur (TI1) und/oder der zweiten Ist-Temperatur (TI2) eine Wandstärke (W3 - W6) des Kunststoffprodukts (1) errechnet wird.

5. Verfahren nach einem der Ansprüche 1 - 4, wobei für den Fall, dass die zweite Ist-Temperatur (TI2) außerhalb und oberhalb des Toleranzbereichs (TB1) der Soll-Temperatur (TS) liegt, die Information ausgegeben wird, dass eine Ist-Wandstärke (WI) des Kunststoffprodukts (1) an dem Messbereich (22 - 25) eine vorgegebene Soll-Wandstärke (WS) des Kunststoffprodukts (1) an dem Messbereich (22 - 25) überschreitet.

6. Verfahren nach Anspruch 5, wobei für den Fall, dass die zweite Ist-Temperatur (TI2) außerhalb und unterhalb des Toleranzbereichs (TB1) der Soll-Temperatur (TS) liegt, die Information ausgegeben wird, dass die Ist-Wandstärke (WI) an dem Messbereich (22 - 25) die vorgegebene Soll-Wandstärke (WS) an dem Messbereich (22 - 25) unterschreitet.

7. Verfahren nach Anspruch 6, wobei eine Extrusionsanlage (7) zum Extrudieren des Kunststoffprodukts (1) so nachgeregelt wird, dass die Ist-Wandstärke (WI) an dem Messbereich (22 - 25) stets innerhalb eines vorgegebenen Toleranzbereichs (TB2) der Soll-Wandstärke (WS) liegt.

8. Verfahren nach einem der Ansprüche 1 - 7, wobei die erste Ist-Temperatur (TI1) und/oder die zweite Ist-Temperatur (TI2) an mehreren an dem Kunststoffprodukt (1) vorgesehenen Messbereichen (22 - 25) erfasst werden, und wobei die Messbereiche (22 - 25) gleichmäßig um das Kunststoffprodukt (1) herum verteilt angeordnet sind.

9. Vorrichtung (13) zur Fertigungskontrolle eines extrudierten Kunststoffprodukts (1), mit
einer Erfassungseinrichtung (21) zum Erfassen einer ersten Ist-Temperatur (TI1) eines an dem Kunststoffprodukt (1) vorgesehenen Messbereichs (22 - 25) an einer ersten Messstelle (30) und zum Erfassen einer zweiten Ist-Temperatur (TI2) des Messbereichs (22 - 25) an einer zweiten Messstelle (31), die in einer Extrusionsrichtung (E) des Kunststoffprodukts (1) beabstandet von der ersten Messstelle (30) angeordnet ist,
einer Recheneinrichtung (36), die zum Bestimmen einer Soll-Temperatur (TS) des Messbereichs (22 - 25) an der zweiten Messstelle (31) eingerichtet ist, wobei die Recheneinrichtung (36) die Soll-Temperatur (TS) basierend auf der ersten Ist-Temperatur (TI1) mit Hilfe einer Auskühlkurve (38) des Kunststoffprodukts (1) errechnet, und
einer Ausgabeeinrichtung (37) zum Ausgeben einer Information, ob die zweite Ist-Temperatur (TI2) innerhalb oder außerhalb eines vorgegebenen Toleranzbereichs (TB1) der Soll-Temperatur (TS) liegt.

10. Vorrichtung nach Anspruch 9, wobei die Erfassungseinrichtung (21) ein erstes berührungslos arbeitendes Erfassungselement (26 - 29), insbesondere eine erste Infrarotkamera, zum Erfassen der ersten Ist-Temperatur (TI1) und ein zweites berührungslos arbeitendes Erfassungselement (32 - 35), insbesondere eine zweite Infrarotkamera, zum Erfassen der zweiten Ist-Temperatur (TI2) umfasst.

11. Vorrichtung nach Anspruch 10, wobei die Erfassungseinrichtung (21) mehrere erste Erfassungselemente (26 - 29), die gleichmäßig um das Kunststoffprodukt (1) herum verteilt angeordnet sind und/oder mehrere zweite Erfassungselemente (32 - 35), die gleichmäßig um das Kunststoffprodukt (1) herum verteilt angeordnet sind umfasst.

12. Extrusionsanlage (7) zum Extrudieren eines Kunststoffprodukts (1), mit einem Extruder (8) und einer dem Extruder (8) in der Extrusionsrichtung (E) nachgeschalteten Vorrichtung (13) nach einem der Ansprüche 9 - 11.

13. Extrusionsanlage nach Anspruch 12, ferner umfassend einen Corrugator (12), der zwischen dem Extruder (8) und der Vorrichtung (13) angeordnet ist.

14. Extrusionsanlage nach Anspruch 12 oder 13, ferner umfassend eine Steuer- und/oder Regeleinrichtung (14), die in Abhängigkeit von der von der Ausgabeeinrichtung (37) ausgegebenen Information die Extrusionsanlage (7) so nachregelt, dass die zweite Ist-Temperatur (TI2) im Betrieb der Extrusionsanlage (7) stets innerhalb des vorgegebenen Toleranzbereichs (TB 1) der Soll-Temperatur (TS) liegt.

## Claims

1. Method for the production control of an extruded plastic product (1) with the following steps:
recording (S1) at a first measuring point (30) a first actual temperature (TI1) of a measuring area (22 - 25) provided on the plastic product (1),
recording (S2) a second actual temperature (TI2) of the measuring area (22 - 25) at a second measuring point (31) which is arranged at a distance from the first measuring point (30) in the direction of extrusion (E) of the plastic product (1),
determining (S3) a setpoint temperature (TS) of the measuring area (22 - 25) at the second measuring point (31), wherein the setpoint temperature (TS) is calculated based on the first actual temperature (TI1) by means of a cooling curve (38) of the plastic product (1), and
outputting (S4) information on whether the second actual temperature (TI2) is inside or outside a prescribed tolerance range (TB1) of the setpoint temperature (TS).

2. Method according to claim 1, wherein the first actual temperature (TI1) is recorded at the first measuring point (31) in the direction of extrusion (E) after a corrugator (12) of an extrusion system (7).

3. Method according to claim 1 or 2, wherein the first actual temperature (TI1) and the second actual temperature (TI2) are recorded by means of a recording device (21) operating without contact.

4. Method according to one of claims 1 - 3, wherein a wall thickness (W3 - W6) of the plastic product (1) is calculated by means of the first actual temperature (TI1) and/or the second actual temperature (TI2).

5. Method according to one of claims 1 - 4, wherein the information that an actual wall thickness (WI) of the plastic product (1) at the measuring area (22 - 25) exceeds a prescribed nominal wall thickness (WS) of the plastic product (1) at the measuring area (22 - 25) is output in the case that the second actual temperature (TI2) is outside and above the tolerance range (TB1) of the setpoint temperature (TS).

6. Method according to claim 5, wherein the information that the actual wall thickness (WI) at the measuring area (22 - 25) falls below the prescribed nominal wall thickness (WS) at the measuring area (22 - 25) is output in the case that the second actual temperature (TI2) is outside and below the tolerance range (TB1) of the setpoint temperature (TS).

7. Method according to claim 6, wherein an extrusion system (7) for extruding the plastic product (1) is readjusted in such a way that the actual wall thickness (WI) at the measuring area (22 - 25) is always within a prescribed tolerance range (TB2) of the nominal wall thickness (WS).

8. Method according to one of claims 1 - 7, wherein the first actual temperature (TI1) and/or the second actual temperature (TI2) are recorded at several measuring areas (22 - 25) provided on the plastic product (1), and wherein the measuring areas (22 - 25) are arranged and distributed evenly around the plastic product (1).

9. Device (13) for the production control of an extruded plastic product (1), comprising
a recording device (21) for recording at a first measuring point (30) a first actual temperature (TI1) of a measuring area (22 - 25) provided on the plastic product (1) and for recording a second actual temperature (TI2) of the measuring area (22 - 25) at a second measuring point (31) which is arranged at a distance from the first measuring point (30) in a direction of extrusion (E) of the plastic product (1),
a computing device (36) for determining a setpoint temperature (TS) of the measuring area (22 - 25) at the second measuring point (31), wherein the computing device (36) calculates the setpoint temperature (TS) based on the first actual temperature (TI1) by means of a cooling curve (38) of the plastic product (1), and
an output device (37) for outputting information on whether the second actual temperature (TI2) is inside or outside a prescribed tolerance range (TB1) of the setpoint temperature (TS).

10. Device according to claim 9, wherein the recording device (21) comprises a first recording element (26 - 29) operating without contact, in particular a first infrared camera, for recording the first actual temperature (TI1), and a second recording element (32 - 35) operating without contact, in particular a second infrared camera, for recording the second actual temperature (TI2).

11. Device according to claim 10, wherein the recording device (21) comprises several first recording elements (26 - 29) which are arranged and distributed evenly around the plastic product (1), and/or several second recording elements (32 - 35) which are arranged and distributed evenly around the plastic product (1).

12. Extrusion system (7) for extruding a plastic product (1), comprising an extruder (8) and a device (13) according to one of claims 9 - 11 arranged downstream of the extruder (8) in the direction of extrusion (E).

13. Extrusion system according to claim 12, furthermore comprising a corrugator (12) arranged between the extruder (8) and the device (13).

14. Extrusion system according to claim 12 or 13, furthermore comprising a control and/or regulating device (14), which readjusts the extrusion system (7) as a function of the information output by the output device (37) in such a way that the second actual temperature (TI2) is always within the prescribed tolerance range (TB 1) of the setpoint temperature (TS) in the operation of the extrusion system (7).

## Revendications

1. Procédé de contrôle de la fabrication d'un produit extrudé en matière plastique (1) comportant les étapes suivantes :
mesure (Sl) d'une première température instantanée (TI1) d'une plage de mesure (22-25) prévue sur le produit en matière plastique (1) à un premier point de mesure (30),
mesure (S2) d'une deuxième température instantanée (TI2) de la plage de mesure (22-25) à un deuxième point de mesure (31) qui est disposé dans une direction d'extrusion (E) du produit en matière plastique (1) à distance du premier point de mesure (30),
détermination (S3) d'une température de consigne (TS) de la plage de mesure (22-25) au deuxième point de mesure (31), la température de consigne (TS) étant calculée sur la base de la première température instantanée (TI1) à l'aide d'une courbe de refroidissement (38) du produit en matière plastique (1), et
délivrance d'une information (S4) indiquant si la deuxième température instantanée (TI2) se situe à l'intérieur ou à l'extérieur d'un intervalle de tolérance prédéterminé (TB1) de la température de consigne (TS).

2. Procédé selon la revendication 1, dans lequel la première température instantanée (TI1) au premier point de mesure (31) est mesurée dans la direction d'extrusion (E) après une machine à anneler (12) d'une installation d'extrusion (7).

3. Procédé selon la revendication 1 ou 2, dans lequel la première température instantanée (TI1) et la deuxième température instantanée (TI2) sont mesurées à l'aide d'un appareil de mesure (21) fonctionnant sans contact.

4. Procédé selon l'une des revendications 1 à 3, dans lequel, une épaisseur de paroi (W3 - W6) du produit en matière plastique (1) est calculée à l'aide de la première température instantanée (TI1) et/ou de la deuxième température instantanée (TI2).

5. Procédé selon l'une des revendications 1 à 4, dans lequel, dans le cas où la deuxième température instantanée (TI2) se situe à l'extérieur et au-dessus de l'intervalle de tolérance (TB1) de la température de consigne (TS), l'information délivrée est qu'une épaisseur de paroi instantanée (WI) du produit en matière plastique (1) dépasse dans la plage de mesure (22 - 25) une épaisseur de paroi de consigne (WS) prédéterminée du produit en matière plastique (1) dans la plage de mesure (22 - 25).

6. Procédé selon la revendication 5, dans lequel, au cas où la deuxième température instantanée (TI2) se situe à l'extérieur et en dessous de l'intervalle de tolérance (TB1) de la température de consigne (TS), l'information délivrée est que l'épaisseur de paroi instantanée (WI) dans la plage de mesure (22 - 25) dépasse l'épaisseur de paroi de consigne prédéterminée (WS) dans la plage de mesure (22 - 25).

7. Procédé selon la revendication 6, dans lequel une installation d'extrusion (7) est réglée pour l'extrusion du produit en matière plastique (1) de telle manière que l'épaisseur de paroi instantanée (WI) dans la plage de mesure (22 - 25) se situe continuellement à l'intérieur d'un intervalle de tolérance (TB2) prédéterminé de l'épaisseur de paroi de consigne (WS).

8. Procédé selon l'une des revendications 1 à 7, dans lequel la première température instantanée (TI1) et/ou la deuxième température instantanée (TI2) sont mesurées dans plusieurs plages de mesures (22 - 25) prévues sur le produit en matière plastique (1) et dans lequel les plages de mesure (22 - 25) sont réparties régulièrement autour du produit en matière plastique (1).

9. Dispositif (13) pour le contrôle de la fabrication d'un produit en matière plastique (1) comportant
un premier appareil de mesure (21) pour mesurer une première température instantanée (TI1) d'une plage de mesure (22 - 25) prévue sur le produit en matière plastique (1) en un premier point de mesure (30) et pour la mesure d'une deuxième température instantanée (TI2) de la page de mesure (22 - 25) en un deuxième point de mesure (31) espacé dans une direction d'extrusion (E) du produit en matière plastique (1) du premier point de mesure (30),
un appareil de calcul (36), qui est placé au deuxième point de mesure (31), pour la détermination d'une température de consigne (TS) de la plage de mesure (22 - 25), l'appareil de calcul (36) calculant la température de consigne (TS) sur la base de la première température instantanée (TI1) à l'aide d'une courbe de refroidissement (38) du produit en matière plastique (1) et
un dispositif de délivrance (37) pour délivrer une information indiquant si la deuxième température instantanée (TI2) se situe à l'intérieur ou à l'extérieur d'un intervalle de tolérance prédéterminé (TB1) de la température de consigne (TS).

10. Dispositif selon la revendication 9, dans lequel l'appareil de mesure (21) comprend un premier élément de mesure fonctionnant sans contact (26 - 29), en particulier une première caméra infrarouge, pour la mesure de la première température instantanée (TI1) et un deuxième élément de mesure (32 - 35) fonctionnant sans contact, en particulier une deuxième caméra infrarouge, pour la mesure de la deuxième température instantanée (TI2).

11. Dispositif selon la revendication 10, dans lequel l'appareil de mesure (21) comprend plusieurs premiers éléments de mesure (26 - 29), qui sont répartis régulièrement autour du produit en matière plastique (1) et/ou plusieurs deuxièmes éléments de mesure (32 - 35), qui sont répartis régulièrement autour du produit en matière plastique (1).

12. Installation d'extrusion (7) pour l'extrusion d'un produit en matière plastique (1), comportant une extrudeuse (8) et un dispositif (13) selon l'une des revendications 9 à 11 disposé en aval de l'extrudeuse (8) dans la direction d'extrusion (E).

13. Installation d'extrusion selon la revendication 12, comprenant en outre une machine à anneler (12) qui est disposée entre l'extrudeur (8) et le dispositif (13).

14. Installation d'extrusion selon la revendication 12 ou 13, comprenant en outre un dispositif de commande et/ou de réglage (14) qui règle l'installation d'extrusion (7) en fonction de l'information fournie par le dispositif de délivrance (37) de telle sorte que la deuxième température instantanée (TI2) soit continuellement lors du fonctionnement de l'installation d'extrusion (7) à l'intérieur de l'intervalle de tolérance prédéterminé (TB1) de la température de consigne (TS).
